# EUROPÄISCHE PATENTSCHRIFT

(11) **EP 1 195 678 B1**
(45) Veröffentlichungstag und Bekanntmachung des Hinweises auf die Patenterteilung: **21.06.2006**
(21) Anmeldenummer: 01440321.6
(22) Anmeldetag: 01.10.2001
(51) Int. Cl.: G06F 11/20

(54) **Verfahren zum Betreiben eines Datenverarbeitungssystems mit Redundanz-Datenverarbeitungseinheit**
Operating method for a data processing system with a redundant processing unit
Méthode d'opération d'un système de traitement de données avec une unité de traitement redondante

(30) Priorität: 05.10.2000 DE 10049621
(43) Veröffentlichungstag der Anmeldung: 10.04.2002
(73) Patentinhaber: ALCATEL, 75008 Paris (FR)
(72) Erfinder: Tillmanns, Heinz, 14532 Stahnsdorf (DE)
(74) Vertreter: Rausch, Gabriele

(56) Entgegenhaltungen:
- DE-A- 3 136 287
- US-A- 5 408 649
- US-A- 5 608 865

## Beschreibung

Die Erfindung betrifft ein Verfahren zum Betreiben eines Datenverarbeitungssystem mit mehreren Datenverarbeitungseinheiten, eine Redundanz-Datenverarbeitungseinheit für ein Datenverarbeitungssystem mit mehreren Datenverarbeitungseinheiten, eine Datenverarbeitungseinheit für ein Datenverarbeitungssystem und ein Datenverarbeitungssystem mit zwei oder mehr aktiven Datenverarbeitungseinheiten und mit mindestens einer Redundanz-Datenverarbeitungseinheit.

In Datenverarbeitungssystemen besteht des öfteren das Erfordernis, eine hohe Verfügbarkeit des Gesamtsystems zu gewährleisten.

Die Erfindung geht von einem im Bereich von Netzwerkmanagementsystemen bekannten Lösungsansatz hierfür aus:

Neben jeder aktiven Datenverarbeitungseinheit, deren Ausfall weitergehende Konsequenzen für die Funktion des Gesamtsystems hat, ist eine Redundanz-Datenverarbeitungseinheit aufgestellt. Die Redundanz-Datenverarbeitungseinheit empfängt dieselben Daten wie die aktive Datenverarbeitungseinheit. Aktive Datenverarbeitungseinheit und Redundanz-Datenverarbeitungseinheit bilden aus Kommunikationssicht eine Einheit. Die Redundanz-Datenverarbeitungseinheit arbeitet im "hot stand-by" Betrieb, d. h., sie führt parallel dieselben Funktionen durch wie die aktive Datenverarbeitungseinheit, empfängt so dieselben Eingangsdaten und produziert dieselben Ausgangsdaten. Wird ein Fehler oder der Ausfall der aktiven Datenverarbeitungseinheit detektiert, so werden vom Datenverarbeitungssystem anstelle der Ausgangsdaten der aktiven Datenverarbeitungseinheit die Ausgangsdaten der Redundanz-Datenverarbeitungseinheit verwendet.

Ein Nachteil dieses Ansatzes besteht darin, daß ein Ausfall der Kommunikationsverbindung zu der aktiven Datenverarbeitungseinheit auch ein Ausfall der Kommunikationsverbindung zu der Redundanz-Datenverarbeitungseinheit bedeutet.

US Patent 5,608,865 offenbart ein Verfahren und ein System zur Verbesserung der Ausfallsicherheit durch die Bereitstellung von aktuellen Kopien gespeicherter Daten auf einem dauerbetriebenen Reservespeichersystem.

Der Erfindung liegt nun die Aufgabe zugrunde, die Ausfallsicherheit eines Datenverarbeitungssystems mit mehreren aktiven Datenverarbeitungseinheiten zu verbessern.

Diese Aufgabe wird gelöst durch ein Verfahren zum Betreiben eines Datenverarbeitungssystems mit mehreren Datenverarbeitungseinheiten nach der Lehre von Anspruch 1, durch eine Redundanz-Datenverarbeitungseinheit nach der Lehre von Anspruch 7, durch eine Datenverarbeitungseinheit nach der Lehre von Anspruch 8-, und durch ein Datenverarbeitungssystem nach der Lehre von Anspruch 9

Der Erfindung liegt hierbei der Gedanke zugrunde, daß eine Redundanz-Datenverarbeitungseinheit für mehrere aktive Datenverarbeitungseinheiten verantwortlich ist. Die Redundanz-Datenverarbeitungseinheit arbeitet nicht mehr im "hot stand-by" Modus und empfängt auch nicht die Eingangdaten der zugeordneten Datenverarbeitungseinheiten. Sie hält vielmehr eine Kopie des aktiven Datenbestands der zugeordneten Datenverarbeitungseinheiten, wobei diese Kopie mittels regelmäßig von den zugeordneten Datenverarbeitungseinheiten übermittelten Korrekturdaten aktualisiert wird. Bei Ausfall einer zugeordneten aktiven Datenverarbeitungseinheit wird deren Funktion dann ausgehend von der Kopie des aktiven Datenbestands dieser Datenverarbeitungseinheit gestartet.

Der Vorteil der Erfindung besteht darin, daß auch der Ausfall der Kommunikationsverbindungen zu einer aktiven Datenverarbeitungseinheit abgesichert werden kann: Redundanz-Datenverarbeitungseinheiten und aktive Datenverarbeitungseinheiten können räumlich verteilt angeordnet werden.

Ein weiterer Vorteil der Erfindung besteht darin, daß hierdurch die Ausfallsicherheit des Datenverarbeitungssystems kostengünstig realisiert werden kann: Für mehrere aktive Datenverarbeitungseinheiten ist nur noch eine Redundanz-Datenverarbeitungseinheit nötig. Die Redundanz-Datenverarbeitungseinheit arbeitet die Funktion einer zugeordneten aktiven Datenverarbeitungseinheit erst bei deren Ausfall ab und benötigt davor nur geringe Verarbeitungskapazitäten. Sie braucht also, auch bei Übernahme der Rolle einer Redundanz-Datenverarbeitungseinheit für eine Vielzahl von Datenverarbeitungseinheit, von Seiten der Verarbeitungskapazität nicht höher als eine einzige Datenverarbeitungseinheit dimensioniert werden. Weiter wird das Kommunikationsnetz durch die Kommunikation zwischen den aktiven Datenverarbeitungseinheiten und den Redundanz-Datenverarbeitungseinheiten nur gering belastet.

Ein weiterer Vorteil der Erfindung besteht darin, daß die Erfindung durch Veränderung weniger Parameter an unterschiedlichste Systemanforderungen angepaßt werden kann. Solche Parameter sind beispielsweise Transferrate der Korrekturdaten, Anzahl der einer Redundanz-Datenverarbeitungseinheit zugeordneten Datenverarbeitungseinheiten, Anzahl der einer Datenverarbeitungseinheit zugeordneten Redundanz-Datenverarbeitungseinheiten, Dimensionierung der Redundanz-Datenverarbeitungseinheiten.

Diese Vorteile werden zum Teil dadurch erkauft, daß nicht mehr sichergestellt werden kann, daß die Redundanz-Datenverarbeitungseinheit beim aktuellen Zustand der zugeordneten aktiven Datenverarbeitungseinheit aufsetzt. Dieser Effekt kann jedoch durch Sicherheitsmechanismen höherer Programm-Ebenen ausgeglichen werden.

Vorteilhafte Ausgestaltungen der Erfindung sind den Unteransprüchen zu entnehmen.

Im folgenden wir die Erfindung anhand mehrerer Ausführungsbeispiele unter Zuhilfenahme beiliegender Zeichnungen beispielhaft erläutert.
- Fig. 1: zeigt ein Blockschaltbild eines erfindungsgemäßen Datenverarbeitungssystems.
- Fig. 2: zeigt eine funktionelle Darstellung eines Ausschnitts aus dem erfindungsgemäßen Datenverarbeitungssystem nach Fig. 1.

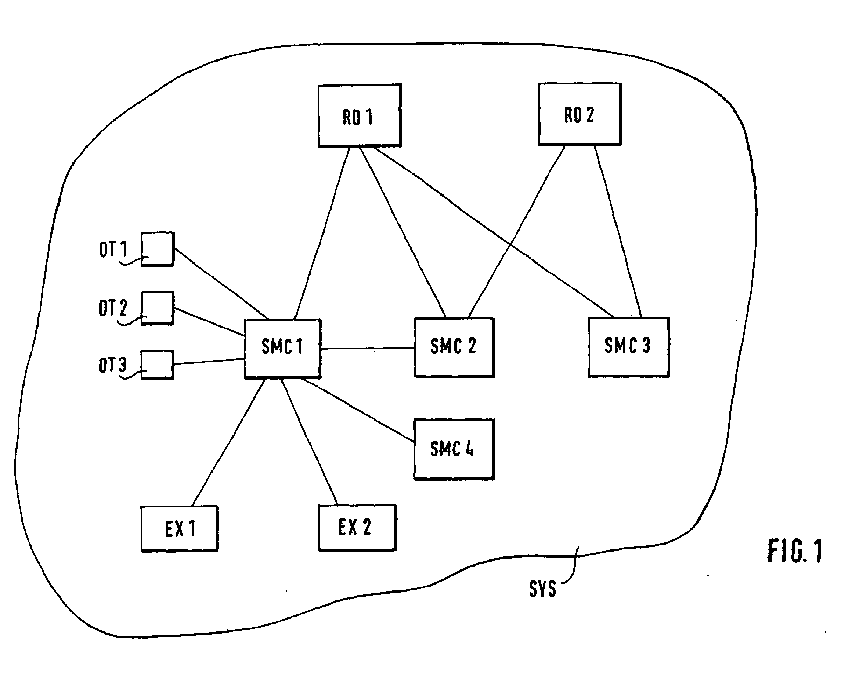

Fig. 1 zeigt ein Datenverarbeitungssystem SYS mit mehreren Datenverarbeitungseinheiten SMC1 bis SMC4, EX1, EX2, OT1 bis OT3,RD1,RD2.

Bei dem Datenverarbeitungssystem SYS handelt es sich um ein Netzwerkmanagementsystem. Es ist jedoch auch möglich, daß es sich bei dem Datenverarbeitungssystem SYS um ein andersartiges Datenverarbeitungssystem handelt, bei dem Hochverfügbarkeitsanforderungen bestehen. Solche Datenverarbeitungssysteme können beispielsweise der Überwachung von Produktionsprozessen, von Verkehrsnetzen oder Satellitennetzen dienen.

Bei den Datenverarbeitungseinheiten SMC1 bis SMC4, EX1, EX2, OT1 bis OT3,RD1, RD2 handelt es sich jeweils um eine Funktionseinheit, die Daten verarbeitet. Diese weist eine Hardware-Plattform auf, die aus einem oder aus mehreren miteinander verbundenen Rechnern besteht und eventuell auch über periphere Komponenten verfügt. Weiter weist sie eine SoftwarePlattform, beispielsweise bestehend aus einem Betriebssystem, und ein oder mehrere darauf ablaufende Applikationsprogramme auf, die Daten verarbeiten.

Die Datenverarbeitungseinheiten SMC1 bis SMC4 stellen jeweils Netzwerkmanagement-Server dar, die Netzwerkmanagementfunktionen ausführen und jeweils ein oder mehrere Netzelemente verwalten. Die Datenverarbeitungseinheiten EX1 und EX2 stellen Netzelemente dar. Die Datenverarbeitungseinheiten OT1 bis OT3 stellen Terminals dar, mittels denen Netzbetreiber die Verwaltung der Netzelemente durch Netzwerkmanagement-Server überwachen und steuern. Die Datenverarbeitungseinheiten RD1 und RD2 stellen Redundanz-Datenverarbeitungseinheiten dar. Die Anzahl der Datenverarbeitungseinheiten, die pro Typ in dem Datenverarbeitungssystem SYS vorhanden sind, ist beispielhaft gewählt.

Die Datenverarbeitungseinheiten SMC1 bis SMC4 kommunizieren mit den Datenverarbeitungseinheiten OT1 bis OT3, EX1, EX2, RD1, und RD2. Diese Kommunikation wird hierbei beispielsweise über ein Signalisierungsnetz eines Telekommunikationsnetzes oder über ein Datennetz, beispielsweise ein IP Netz (IP = Internet Protokoll) abgewickelt.

Den Redundanz-Datenverarbeitungseinheiten RD1 und RD2 sind die aktiven Datenverarbeitungseinheiten SMC1 bis SMC3 bzw. SMC2und SMC3 zugeordnet. Die Datenverarbeitungseinheit RD1 erbringt somit die Rolle einer Redundanz-Datenverarbeitungseinheit für jede der Datenverarbeitungseinheiten SMC1 bis SMC3 und die Datenverarbeitungseinheiten RD2 erbringt die Rolle einer Redundanz-Datenverarbeitungseinheit für jede der Datenverarbeitungseinheiten SMC2 und SMC3. Redundanz-Datenverarbeitungseinheit bedeutet in diesem Zusammenhang, daß diese Datenverarbeitungseinheit die Rolle einer anderen Datenverarbeitungseinheit übernehmen kann, die beispielsweise bedingt durch einen Ausfall von einem Zustand aktiv in einen Zustand nicht-aktiv wechselt.

Im Folgenden wird die Erfindung beispielhaft anhand des Redundanz-Konzepts für die Datenverarbeitungseinheiten SMC1 bis SMC3 erläutert:

Die Datenverarbeitungseinheiten SMC1 bis SMC3 stellen aktive Datenverarbeitungseinheiten des Datenverarbeitungssystems SYS dar. Den Redundanz-Datenverarbeitungseinheit/RD1 und RD2 des Datenverarbeitungssystems SYS werden jeweils mehrere aktive Datenverarbeitungseinheiten des Datenverarbeitungssystems SYS, nämlich die Datenverarbeitungseinheiten SMC1 bis SMC3 bzw. SMC2 und SMC3 zugeordnet. Die Datenverarbeitungseinheiten RD1 und RD2 erbringen so jeweils die Rolle einer Redundanz-Datenverarbeitungseinheit für diese zugeordneten Datenverarbeitungseinheit. Wie aus Fig. 1 ersichtlich ist es auch möglich, daß einer der aktiven Datenverarbeitungseinheiten, beispielsweise den Datenverarbeitungseinheiten SMC2 und SMC3, zwei oder mehr Redundanz-Datenverarbeitungseinheiten zugeordnet werden. Es ist natürlich auch möglich, daß den Redundanz-Datenverarbeitungseinheiten RD1 oder RD2 noch weitere Datenverarbeitungseinheiten zugeordnet werden.

Die Redundanz-Datenverarbeitungseinheiten RD1 und RD2 speichern jeweils eine Kopie des aktiven Datenbestand jeder der ihr zugeordneten aktiven Datenverarbeitungseinheiten SMC1 bis SMC3. Jeder der aktiven Datenverarbeitungseinheiten SMC1 bis SMC3 ermittelt periodisch die Veränderung ihrer aktuellen aktiven Datenbestands in Bezug auf die in der zugeordneten Redundanz-Datenverarbeitungseinheit RD1 und RD2 gespeicherten Kopie ihreres aktiven Datenbestands und übermittelt diese Veränderung beschreibende Korrektur-Daten an die zugeordnete Redundanz-Datenverarbeitungseinheit. Die Datenverarbeitungseinheit SMC1 sendet diese Korrektur-Daten somit an die Redundanz-Datenverarbeitungseinheit RD1, und die Datenverarbeitungseinheiten SMC2 und SMC3 senden diese Korrektur-Daten jeweils an beide Redundanz-Datenverarbeitungseinheiten RD1 und RD2.

Die Redundanz-Datenverarbeitungseinheiten RD1 und RD2 aktualisieren mittels dieser übermittelten Korrekturdaten jeweils die von ihnen gespeicherten Kopien des aktiven Datenbestands der jeweiligen übermittelnden aktiven Datenverarbeitungseinheiten SMC1 bis SMC3. Beim Ausfall einer ihr zugeordneten aktiven Datenverarbeitungseinheit übernehmen die Redundanz-Datenverarbeitungseinheiten RD1 und RD2 jeweils die Funktion dieser ausgefallenen Datenverarbeitungseinheit ausgehend von der von ihr gespeicherten Kopie des aktiven Datenbestands der ausgefallen Datenverarbeitungseinheit. Die Redundanz-Datenverarbeitungseinheit RD1 übernimmt somit in diesem Fall die Funktion der Datenverarbeitungseinheit SMC1, und die Funktion der Datenverarbeitungseinheiten SMC2 und SMC3 wird von der Redundanz-Datenverarbeitungseinheiten RD1 oder der Redundanz-Datenverarbeitungseinheiten RD2 übernommen.

Weiter werden beim Ausfall einer der aktiven Datenverarbeitungseinheiten SMC1 bis SMC3 die Kommunikationsbeziehungen zwischen Datenverarbeitungseinheiten des Datenverarbeitungssystems SYS und der ausgefallenen Datenverarbeitungseinheit auf diejenige Redundanz-Datenverarbeitungseinheit umgeschaltet, der die ausgefallene Datenverarbeitungseinheit zugeordnet ist. Dieses Umschalten kann von den von dem Ausfall betroffenen Datenverarbeitungseinheiten oder Redundanz-Datenverarbeitungseinheiten SYS selbst, aber auch von einer anderen Einheit des Datenverarbeitungssystems veranlaßt werden. Die Umleitung kann hierbei auch transparent für die beteiligten Datenverarbeitungseinheiten erfolgen, beispielsweise durch die Veränderung von Lenkungstabellen.

Im folgenden wird der detaillierte Aufbau der Datenverarbeitungseinheiten SMC1 bis SMC3 und der Redundanz-Datenverarbeitungseinheiten RD1 und RD2 anhand der Datenverarbeitungseinheit SMC1 und der Redundanz-Datenverarbeitungseinheiten RD1 erläutert.

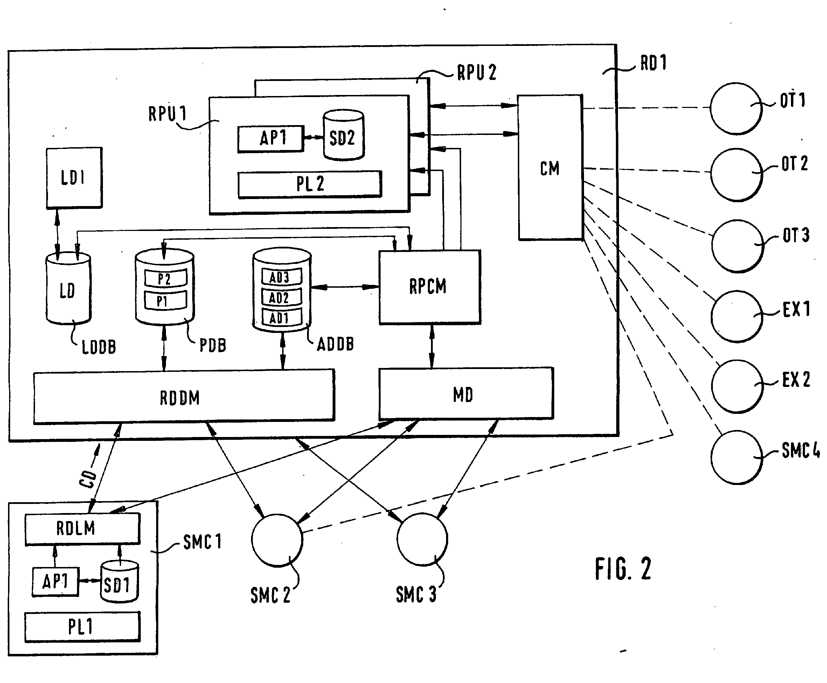

Fig. 2 zeigt die Datenverarbeitungseinheiten SMC1 bis SMC4, EX1, EX2, OT1 bis OT3 und RD1.

Die Datenverarbeitungseinheit SMC1 weist aus funktioneller Sicht eine Systemplattform PL1, Daten SD1, und zwei Applikationsprogramme AP1 und RDLM auf.

Die Systemplattform PL1 weist die notwendigen Hardware- und Softwarekomponenten auf, die zum Ablauf der Applikationsprogramme AP1 und RDLM benötigt werden. Die Systemplattform PL1 weist somit beispielsweise einen Rechner oder mehrere miteinander verbundene Rechner auf, die mit peripheren Komponenten zur Kommunikation mit den Datenverarbeitungseinheiten OT1 bis OT3, SMC2, SMC4 und RD1 benötigt werden. Weiter weist die Systemplattform PL1 ein Betriebssystem und eventuell Middelware-Komponenten auf, die den Applikationsprogrammen AP1 und RDLM den Ablauf auf den Hardware-Komponenten der Systemplattform PL1 ermöglichen.

Das Applikationsprogramm AP1 bildet eine Funktionseinheit die die Funktionen der Datenverarbeitungseinheit SMC1 innerhalb des Datenverarbeitungssystems SYS erbringt und steuert und somit die eigentliche Funktion der Datenverarbeitungseinheit SMC1 als Netzwerkmanagement-Server erbringt. Bei seinem Ablauf greift das Applikationsprogramm P1 hierbei auf die Daten SD1 zu. Die Daten SD1 stellen somit den für die Funktion Netzwerkmanagement-Server benötigten Datenbestand der Datenverarbeitungseinheit SMC1 dar.

Das Applikationsprogramm RDLM bildet eine Funktionseinheit, die den Kontakt mit der zugeordneten Redundanz-Datenverarbeitungseinheit RD1 hält und sämtliche Funktionen ausführt, die in Zusammenhang mit dem Redundanz-Konzept innerhalb der Datenverarbeitungseinheit SMC1 auszuführen sind.

Das Applikationsprogramm RDLM ermittelt periodisch die Veränderung des aktuellen aktiven Datenbestands der Datenverarbeitungseinheit SMC1 in Bezug auf eine in der zugeordneten Redundanz-Datenverarbeitungseinheit RD1 gespeicherten Kopie ihres aktiven Datenbestands. Der aktive Datenbestand, dessen Veränderung von dem Applikationsprogramm RDLM erfaßt wird, kann identisch mit den Daten SD1 sein, d. h. alle Daten umfassen, die für die aktive Erbringung der eigentlichen Funktion der Datenverarbeitungseinheit SMC 1 benötigt werden. Es ist natürlich auch möglich, daß die aktive Daten, deren Veränderung von dem Applikationsprogramm RDLM erfaßt wird, den gesamten Datenbestand der Datenverarbeitungseinheit SMC1 umfassen.

Es ist weiter oft vorteilhaft, daß der aktive Datenbestand, dessen Veränderung von dem Applikationsprogramm RDLM erfaßt wird, lediglich eine Teilmenge der Daten SD1 ist. Beispielsweise können die Daten SD1 der Datenverarbeitungseinheiten SMC1 in standort-spezifische Daten und in standort-unabhängige Daten unterteilt werden. Auch wenn die standort-spezifische Daten zur Erbringung der Funktion des Applikationsprogramms AP1 benötigt werden, ist es vorteilhaft, ihre Veränderung nicht zu erfassen und keine Kopie dieser Daten in der Redundanz-Datenverarbeitungseinheit RD1 zu speichern, da bei der Übernahme der Funktion der Datenverarbeitungseinheit SMC1 durch die Redundanz-Datenverarbeitungseinheit RD1 diese Daten speziell für den Standort der Redundanz-Datenverarbeitungseinheit RD1 gebildet werden müssen. Der aktive Datenbestand der Datenverarbeitungseinheit SMC1 wird so nur von den standort-unabhängige Daten der Datenverarbeitungseinheit SMC1 gebildet und nur diese Daten gehen in die Ermittlung der Korrekturdaten CS ein.

Das Applikationsprogramm RDLM legt in der Initialisierungsphase den Teil des Datenbestands der Datenverarbeitungseinheit SMC1 fest, der den aktiven Datenbestand der Datenverarbeitungseinheit SMC1 bildet. Der aktive Datenbestand der Datenverarbeitungseinheit SMC1 wird somit zum Beispiel von einer Teilmenge der Daten SD1 gebildet. Die Auswahl dieser Daten kann hierbei automatisch mittels vorgegebener Filterkriterien oder aufgrund einer vorgegebenen Auswahl erfolgen. Danach wird eine Kopie des festgelegten aktiven Datenbestands an die Datenverarbeitungseinheit RD1 übertragen.

In der folgenden Betriebsphase ermittelt das Applikationsprogramm RDLM periodisch Korrekturdaten CD. Hierfür vergleicht es den aktuellen aktiven Datenbestand der Datenverarbeitungseinheit SMC1 mit dem aktiven Datenbestand der Datenverarbeitungseinheit SMC1 zum Zeitpunkt der letzen Ermittlung von Korrekturdaten CD und ermittelt hieraus die Veränderung ihreres aktuellen aktiven Datenbestands in Bezug auf die in der zugeordneten Redundanz-Datenverarbeitungseinheit RD1 gespeicherten Kopie ihreres aktiven Datenbestands. Es ist auch möglich, daß das Applikationsprogramm RDLM laufend den aktiven Datenbestand der Datenverarbeitungseinheit SMC1 überwacht und jede Änderung der aktiven Daten aufzeichnet. Die Aufzeichnung zwischen zwei Zeitpunkten der Übermittlung von Korrekturdaten, eventuell in bearbeiteter Form, bilden dann die zu übermittelnden Korrekturdaten CD.

Es ist natürlich auch möglich, daß eine Kopie des aktiven Datenbestands der Datenverarbeitungseinheit SMC1 nicht nur in der Initialisierungsphase an die Redundanz-Datenverarbeitungseinheit RD1 übermittelt wird, sondern auch zu einem später Zeitpunkt in der Betriebsphase nochmals, auch wiederholt, übermittelt wird. Hierdurch kann die Aufsummierung von Fehlern verringert werden.

Das Applikationsprogramm RDLM veranlaßt nach Ermittlung der diese Veränderung beschreibende Korrektur-Daten CD die Übermittlung der Korrektur-Daten CD an die zugeordnete Redundanz-Datenverarbeitungseinheit RD1 zur Aktualisierung der in der zugeordneten Redundanz-Datenverarbeitungseinheit RD1 gespeicherten Kopie des aktiven Datenbestands der Datenverarbeitungseinheit SMC1. Sind der Datenverarbeitungseinheiten SMC1 mehr als eine Redundanz-Datenverarbeitungseinheiten zugeordnet, so werden die Korrekturdaten CD an all diese zugeordneten Redundanz-Datenverarbeitungseinheiten übermitteln. Hierbei ist es natürlich auch möglich, daß die Periode der Ermittlung und Übermittlung von Korrektur-Daten von Redundanz-Datenverarbeitungseinheit zu Redundanz-Datenverarbeitungseinheit unterschiedlich sein kann.

Weiter ist es vorteilhaft, daß das Applikationsprogramm RDLM die Veränderung des Applikationsprogramms AP1 überwacht und die zugeordnete Redundanz-Datenverarbeitungseinheit RD1 über eine Veränderung der Programm-Version des Applikationsprogramms AP1 informiert. Hierbei ist es möglich, daß das Applikationsprogramm RDLM in der Initialisierungsphase der Redundanz-Datenverarbeitungseinheit RD1 eine Kopie der aktuellen Programm-Version des Applikationsprogramms AP1 oder eine Kennung für diese Programm-Version übermittelt. Spätere Veränderungen können der zugeordnete Redundanz-Datenverarbeitungseinheit RD1 in gleicher Weise angezeigt werden.

Die Redundanz-Datenverarbeitungseinheit RD1 weist mehrere Datenbanken LDDB, PDB und ADDB und mehrere Funktionseinheiten RDDM, MD, LDI, RPCM, CM, RPU1 und RPU2, auf.

In der Datenbank ADDB sind jeweils eine Kopie des aktiven Datenbestands von zwei oder mehr aktiven Datenverarbeitungseinheiten des Datenverarbeitungssystems SYS abgespeichert, denen die Redundanz-Datenverarbeitungseinheit RD1 zugeordnet ist. Die Datenbestände AD1, AD2 und AD2 stellen jeweils ein Kopie des aktiven Datenbestands der Datenverarbeitungseinheiten SMC1, SMC2 bzw. SMC3 dar.

In der Datenbank LDDB sind lokale Daten LD der Redundanz-Datenverarbeitungseinheit RD1 gespeichert.

In der Datenbank PDB sind Programm-Versionen von Applikationsprogrammen gespeichert, die in Datenverarbeitungseinheiten verwendet werden, denen die Redundanz-Datenverarbeitungseinheit RD1 als Redundanz-Datenverarbeitungseinheit zugeordnet ist. In der Datenbank PDB sind beispielsweise Program-Versionen P1 und P2 gespeichert, die die Programme darstellen, die den Datenverarbeitungseinheiten SMC1 bis SMC2 als Applikationsprogramme für die Erbringung der Funktion dieser Datenverarbeitungseinheiten verwendet werden.

Es ist auch möglich, auf die Datenbanken LDDB und PDB zu verzichten.

Die Funktionseinheiten RDDM, MD, LDI, RPCM, CM, RPU1 und RPU2 werden jeweils beispielsweise von einem (Applikations-)Programm gebildet, das auf der Systemplattform der Redundanz-Datenverarbeitungseinheit RD1 abläuft. Die Funktionseinheiten RDDM, MD, LDI, RPCM, CM, RPU1 und RPU2 führen im Einzelnen folgende Funktionen aus:

Die Funktionseinheit RDDM aktualisiert die in der Datenbank ADDB gespeicherten Kopien der aktiven Datenbestände AD1 bis AD3 der aktiven Datenverarbeitungseinheiten SMC1 bis SMC3, denen die Redundanz-Datenverarbeitungseinheit RD1 als Redundanz-Datenverarbeitungseinheit zugeordnet ist. Zur Aktualisierung wertet sie hierbei Korrekturdaten aus, die ihr von den jeweiligen zugeordneten aktiven Datenverarbeitungseinheit SMC1 bis SMC3 übermittelt werden und die von der jeweiligen zugeordneten aktiven Datenverarbeitungseinheiten SMC1 bis SMC3 periodisch aus der Veränderung ihreres aktuellen aktiven Datenbestands in Bezug auf die in der Datenbank ADDB der Redundanz-Datenverarbeitungseinheit RD1 gespeicherten Kopie ihres aktiven Datenbestands AD1 bis AD3 ermittelt wird. Solche Korrekturdaten sind beispielsweise die Korrekturdaten CD, die von der Datenverarbeitungseinheit SMC1 wie oben dargelegt ermittelt werden. Die in den Korrekturdaten jeweils angegeben Veränderungen des jeweiligen aktiven Datenbestands werden von der Funktionseinheit RDDM sodann an den in der Datenbank ADDB gespeicherten Kopien der aktiven Datenbestände AD1 bis AD3 vorgenommen, wodurch diese aktualisiert werden.

Weiter ist es möglich, daß die Funktionseinheit RDDM in einer Initialisierungsphase, aber auch in der Betriebsphase volle oder teilweise Kopien der aktiven Datenbestände AD1 bis AD3 der ihr zugeordneten Datenverarbeitungseinheiten SMC1 bis SMC3 empfängt und diese sodann in der Datenbank ADDB abspeichert.

In gleicher Weise ist es möglich, daß die Funktionseinheit RDDM in einer Initialisierungsphase, aber auch in der Betriebsphase Kopien der Programm-Versionen P1 und P2 der ihr zugeordneten Datenverarbeitungseinheiten SMC1 bis SMC3 empfängt und diese sodann in der Datenbank PDB abspeichert. Dies kann insbesondere dann der Fall sein, wenn die Programm-Version einer der Datenverarbeitungseinheiten SMC1 bis SMC3 wechselt.

Weiter ist es möglich daß die aktiven Datenverarbeitungseinheiten SMC1 bis SMC3 in der Redundanz-Datenverarbeitungseinheit RD1, der sie zugeordnet sind, in Bezug auf die von ihnen aktuell verwendete Programm-Versionen klassifiziert sind und daß in der Datenbank PDB der Redundanz-Datenverarbeitungseinheit RD1 für jede Klasse von aktiven Datenverarbeitungseinheiten eine Kopie der dieser Klasse aktuell zugeordneten Programm-Version gespeichert ist. So sind beispielsweise die Datenverarbeitungseinheiten SMC1 und SMC2 einer ersten Klasse von aktiven Datenverarbeitungseinheiten zugeordnet, denen die Programm-Version P1 zuordnet ist. Beide Datenverarbeitungseinheiten SMC1 und SMC2 führen somit dasselbe Programm aus und erbringen so ähnliche Funktion. Die Datenverarbeitungseinheit SMC3 ist einer zweiten Klasse von aktiven Datenverarbeitungseinheiten zugeordnet, der die Programm-Version P2 zuordnet ist.

Die Funktionseinheit LDI ermittelt in der Initialisierungsphase des Datenverarbeitungssystems SYS eigene standort-spezifische Daten LD der Redundanz-Datenverarbeitungseinheit RD1 und speichert diese in der Datenbank LD ab.

Die Funktionseinheit MD überwacht die Funktion der ihr zugeordneten aktiven Datenverarbeitungseinheiten SMC1 bis SMC3 und die Kommunikationsverbindung zu den aktiven Datenverarbeitungseinheiten SMC1 bis SMC3. Hierzu sendet sie beispielsweise periodische Überwachungsnachrichten an die Datenverarbeitungseinheiten SMC1 bis SMC3 und überwacht den Eingang der Antwortnachrichten der Datenverarbeitungseinheiten SMC1 bis SMC3 auf diese Überwachungsnachrichten. Die hierzu in den Datenverarbeitungseinheiten SMC1 bis SMC3 auszuführende Prozedur wird beispielsweise in der Datenverarbeitungseinheiten SMC1 von dem Applikationsprogramm RDLM ausgeführt.

Ermittelt die Funktionseinheit MD den Ausfall einer der Datenverarbeitungseinheiten SMC1 bis SMC3 oder der Kommunikationsverbindung zu einer der Datenverarbeitungseinheiten SMC1 bis SMC3, so sendet sie eine entsprechende Triggernachricht an die Funktionseinheit RPCM.

Es ist natürlich auch möglich, daß das Ermitteln des Ausfalls einer der Datenverarbeitungseinheiten, denen die Redundanz-Datenverarbeitungseinheit RD1 als Redundanz-Datenverarbeitungseinheit zugeordnet ist, von einer anderen Komponente des Datenverarbeitungssystems SYS erbracht wird und so auf die Funktionseinheit MD verzichtet werden kann. Beispielsweise wird ein solcher Ausfall von einer der Datenverarbeitungseinheiten, die mit einer solchen Datenverarbeitungseinheit zusammenarbeitet, erkannt. Diese Datenverarbeitungseinheit sendet sodann die Triggernachricht an die Funktionseinheit RPCM.

Die Funktionseinheit RPCM initiiert beim Ausfall einer der Redundanz-Datenverarbeitungseinheit RD1 zugeordneten aktiven Datenverarbeitungseinheit die Übernahme der Funktion dieser ausgefallenen Datenverarbeitungseinheit ausgehend von der in der Datenbank ADDB gespeicherten Kopie des aktiven Datenbestands der ausgefallen Datenverarbeitungseinheit. Hierzu instantiert sie innerhalb der Redundanz-Datenverarbeitungseinheit RD1 eine Funktionseinheit, die die Funktion dieser ausgefallenen Datenverarbeitungseinheit ausgehend von der in der Datenbank ADDB gespeicherten Kopie des aktiven Datenbestands der ausgefallen Datenverarbeitungseinheit ausführt. Weiter steuert und Überwacht die Funktionseinheit RPCM den Lebenszyklus dieser von ihr instantierten Funktionseinheiten.

In Fig. 2 sind beispielhaft zwei Funktionseinheiten, nämlich die Funktionseinheiten RPU1 und RPU2, gezeigt, die solche von der Funktionseinheit RPCM instantierte Funktionseinheiten darstellen. Die Funktionseinheit RPU1 weist eine Softwareplattform PL2, ein Applikationsprogramm AP2 und einen Datenbestand SD2 auf. Das Applikationsprogramm AP2 läuft unter Verwendung des Datenbestands SD2 auf der Softwareplattform PL2 ab und führt hierbei die Funktion der ausgefallenen Datenverarbeitungseinheit aus.

Zur Instantierung der Funktionseinheit RPU1 bestimmt die Funktionseinheit RPCM das Applikationsprogramm und den Datenbestand, mit dem die Funktionseinheit RPU1 instantiert werden soll. Hierzu ermittelt die Funktionseinheit RPCM eine der ausgefallenen Datenverarbeitungseinheit zugeordnete Programm-Version und aktiviert diese mit der gespeicherten Kopie des aktiven Datenbestands der ausgefallen Datenverarbeitungseinheit.

Fällt beispielsweise die Datenverarbeitungseinheit SMC1 aus, so ermittelt die Funktionseinheit RPCM die Programm-Version der Datenverarbeitungseinheit SMC1, nämlich die Programm-Version P1, und die Kopie des aktiven Datenbestands der Datenverarbeitungseinheit SMC1, nämlich den Datenbestand AD1, die in der Redundanz-Datenverarbeitungseinheit RD1 gespeichert ist. Anschtießend kopiert sie die ermittelte Programm-Version P1 aus der Datenbank PDB und den aktiven Datenbestand aus der Datenbank ADDB in die Funktionseinheit.

Es ist hierbei auch möglich, daß der Datensatz SD2 neben dem aktiven Datenbestand AD1 noch weitere Daten umfaßt. Solche Daten können beispielsweise standort-spezifischen Daten der Redundanz-Datenverarbeitungseinheit RD1 sein. Die Funktionseinheit RPCM entnimmt der Datenbank LDDB beispielsweise die Daten LD, integriert diese Daten in den Datenbestand AD1 und speichert den sich so ergebenden Datensatz als Datenbestand SD2 in der Funktionseinheit RPU1 ab.

Die Funktionseinheit CM hält beim Ausfall einer aktiven Datenverarbeitungseinheit die Kommunikationsbeziehungen zwischen Datenverarbeitungseinheiten des Datenverarbeitungssystems und der die Funktion der ausgefallenen Datenverarbeitungseinheit übernehmenden Funktionseinheiten RPU1 und RPU2 aufrecht. Hintergrund hierbei ist, daß beim Ausfall einer aktiven Datenverarbeitungseinheit die Kommunikationsbeziehungen zwischen Datenverarbeitungseinheiten des Datenverarbeitungssystems und der ausgefallenen Datenverarbeitungseinheit auf die Redundanz-Datenverarbeitungseinheit umgeschaltet werden, dem die ausgefallene Datenverarbeitungseinheit zugeordnet ist. Diese umgeschalteten Kommunikationsbeziehungen werden von der Funktionseinheit CM bedient.

Beim Ausfall der Datenverarbeitungseinheit SMC1 und bei der Übernahme der Funktion der Datenverarbeitungseinheit SMC1 durch die Funktionseinheit RPU 1 hält die Funktionseinheit CM somit die Kommunikationsbeziehungen zwischen der Funktionseinheit RPU1 und den Datenverarbeitungseinheiten OT1 bis OT3, EX1, EX2, SMC2, SMC4, die vorher mit der Datenverarbeitungseinheit SMC1 kommuniziert haben, aufrecht.

## Patentansprüche

1. Verfahren zum Betreiben eines Datenverarbeitungssystems (SYS) mit mehreren Datenverarbeitungseinheiten (SMC1 bis SMC4, EX1, EX2, OT1 bis OT3, RD1, RD2), bei dem
einer Redundanz-Datenverarbeitungseinheit (RD1, RD2) des Datenverarbeitungssystems (SYS) jeweils zwei oder mehr aktive Datenverarbeitungseinheiten (SMC1 bis SMC3) des Datenverarbeitungssystems zugeordnet werden, bei dem die Redundanz-Datenverarbeitungseinheit (RD1, RD2) jeweils eine Kopie des aktiven Datenbestands (AD1 bis AD3) jeder der ihr zugeordneten aktiven Datenverarbeitungseinheiten (SMC1 bis SMC3) speichert, bei dem jede der zwei oder mehr aktiven Datenverarbeitungseinheiten (SMC1 bis SMC3) periodisch die Veränderung ihres aktuellen aktiven Datenbestands in Bezug auf die in der zugeordneten Redundanz-Datenverarbeitungseinheit (RD1, RD2) gespeicherten Kopie ihres aktiven Datenbestands (AD1 bis AD3) ermittelt und diese Veränderung beschreibende Korrektur-Daten (CD) an die zugeordnete Redundanz-Datenverarbeitungseinheit (RD1, RD2) übermittelt, bei dem die Redundanz-Datenverarbeitungseinheit (RD1, RD2) mittels dieser übermittelten Korrekturdaten (CD) die von ihr gespeicherte Kopie des aktiven Datenbestands (AD1 bis AD3) der jeweiligen übermittelnden aktiven Datenverarbeitungseinheit (SMC1 bis SMC3) aktualisiert, und bei dem die Redundanz-Datenverarbeitungseinheit (RD1) beim Ausfall einer ihr zugeordneten aktiven Datenverarbeitungseinheit (SMC1) die Funktion dieser ausgefallenen Datenverarbeitungseinheit (SMC1) ausgehend von der von ihr gespeicherten Kopie des aktiven Datenbestands (AD1) der ausgefallen Datenverarbeitungseinheit (SMC1) übernimmt,
**dadurch gekennzeichnet, daß**
die zwei oder mehr aktiven Datenverarbeitungseinheiten (SMC1 bis SMC3) die Veränderung eines ihrer Applikationsprogramme (AP1) überwachen und die zugeordnete Redundanz-Datenverarbeitungseinheit (RD1, RD2) über eine Veränderung der Programm-Version (P1, P2) des Applikationsprogramms informieren und Kopien dieser Programm-Versionen (P1, P2) oder eine Kennungderselben übemitteln, und
zum Übernehmen der Funktion einer ausgefallenen Datenverarbeitungseinheit (SMC1) eine der ausgefallenen Datenverarbeitungseinheit (SMC1) zugeordnete Programm-Version (P1) ermittelt wird und diese Programm-Version (P1) mit der gespeicherten Kopie des aktiven Datenbestands (AD1) der ausgefallenen Datenverarbeitungseinheit aktiviert wird.

2. Verfahren nach Anspruch 1, **dadurch gekennzeichnet, daß** einer der ein oder mehreren aktiven Datenverarbeitungseinheiten (SMC2, SMC3) zwei oder mehr Redundanz-Datenverarbeitungseinheiten (RD1, RD2) zugeordnet werden und daß diese aktive Datenverarbeitungseinheiten (SMC2, SMC3) Korrekturdaten an all diese zugeordneten Redundanz-Datenverarbeitungseinheiten (RD1, RD2) übermitteln.

3. Verfahren nach Anspruch 1, **dadurch gekennzeichnet, daß** in der Redundanz-Datenverarbeitungseinheit (RD2, RD2) Kopien der aktuellen Programm-Versionen (P1, P2) der ihr zugeordneten aktiven Datenverarbeitungseinheiten (SMC1 bis SMC3) abspeichert werden.

4. Verfahren nach Anspruch 3, **dadurch gekennzeichnet, daß** die zwei oder mehr aktiven Datenverarbeitungseinheiten (SMC1 bis SMC3) in der Redundanz-Datenverarbeitungseinheit (RD1, RD2), der sie zugeordnet sind, in Bezug auf die von ihnen aktuell verwendeten Programm-Versionen klassifiziert sind und daß die Redundanz-Datenverarbeitungseinheit (RD1, RD2) für jede Klasse von aktiven Datenverarbeitungseinheiten eine Kopie der dieser Klasse aktuell zugeordneten Programm-Version speichert.

5. Verfahren nach Anspruch 1, **dadurch gekennzeichnet, daß** der Datenbestand (SD1) der zwei oder mehr aktiven Datenverarbeitungseinheiten (SMC1) in standort-spezifische Daten und standort-unabhängige Daten (AD1) unterteilt wird und daß nur standort-unabhängige Daten den aktiven Datenbestand der Datenverarbeitungseinheit (SMC1) bilden und in die Ermittlung der Korrekturdaten (CS) eingehen.

6. Verfahren nach Anspruch 1, **dadurch gekennzeichnet, daß** zum Übernehmen der Funktion einer ausgefallenen Datenverarbeitungseinheit (SMC1) eine der ausgefallenen Datenverarbeitungseinheit zugeordnete Programm-Version (P1) ermittelt wird und diese Programm-Version (P1) mit der gespeicherten Kopie des aktiven Datenbestands (AD1) der ausgefallen Datenverarbeitungseinheit (SMC1) und standort-spezifischen Daten (LD) der Redundanz-Datenverarbeitungseinheit aktiviert wird.

7. Redundanz-Datenverarbeitungseinheit (RD1, RD2) für ein Datenverarbeitungssystem (SYS) mit mehreren Datenverarbeitungseinheiten (SMC1 bis SMC4, EX1, EX2, OT1 bis OT3,RD1,RD2), bei dem die Redundanz-Datenverarbeitungseinheit (RD1, RD2) mit einer Datenbank (ADDB) versehen ist, in der jeweils eine Kopie des aktiven Datenbestands (AD1 bis AD3) von zwei oder mehr aktiven Datenverarbeitungseinheiten (SMC1 bis SMC3) des Datenverarbeitungssystems abgespeichert ist, denen die Redundanz-Datenverarbeitungseinheit (RD1, RD2) zugeordnet ist, bei dem die Redundanz-Datenverarbeitungseinheit (RD1, RD2) so ausgestaltet ist, daß sie die in der Datenbank (ADDB) gespeicherten Kopien des aktiven Datenbestands (AD1 bis AD3) der aktiven Datenverarbeitungseinheiten (SMC1 bis SMC3), denen sie zugeordnet ist, mittels Korrekturdaten (CD) aktualisiert, die ihr jeweils von den jeweiligen zugeordneten aktiven Datenverarbeitungseinheit (SMC1 bis SMC3) übermittelt werden und die von der jeweiligen zugeordneten aktiven Datenverarbeitungseinheiten (SMC1 bis SMC3) periodisch aus der Veränderung ihres aktuellen aktiven Datenbestands in Bezug auf die in der Redundanz-Datenverarbeitungseinheit (RD1, RD2) gespeicherten Kopie ihres aktiven Datenbestands (AD1 bis AD3) ermittelt wird, und bei dem die Redundanz-Datenverarbeitungseinheit (RD1, RD2) weiter so ausgestaltet ist, daß sie beim Ausfall einer ihr zugeordneten aktiven Datenverarbeitungseinheit (SMC1) die Funktion dieser ausgefallenen Datenverarbeitungseinheit (SMC1) ausgehend von der von ihr gespeicherten Kopie des aktiven Datenbestands (AD1) der ausgefallen Datenverarbeitungseinheit (SMC1) übernimmt,
**dadurch gekennzeichnet, daß** die Redundanz-Datenverarbeitungseinheit (RD1, RD2) weiter so ausgestaltet ist, daß sie
in einer Initialisierungsphase, aber auch in der Betriebsphase, Kopien oder eine Kennung der Programm-Versionen (P1, P2) der ihr zugeordneten Datenverarbeitungseinheiten (SMC1 bis SMC3) empfängt, und beim Ausfall einer ihr zugeordneten aktiven Datenverarbeitungseinheit (SMC1) dessen zugeordnete Programm-Version (P1) ermittelt und diese Programm-Version (P1) mit der gespeicherten Kopie des aktiven Datenbestands (AD1) der ausgefallenen Datenverarbeitungseinheit (SMC1) aktiviert wird.

8. Datenverarbeitungseinheit (SMC1 bis SMC3) für ein Datenverarbeitungssystem (SYS) mit mehreren Datenverarbeitungseinheiten (SMC1 bis SMC4, EX1, EX2, OT1 bis OT3,RD1, RD2) und mit mindestens einer der Datenverarbeitungseinheit zugeordneten Redundanz-Datenverarbeitungseinheit (RD1, RD2), wobei
die Datenverarbeitungseinheit (SMC1 bis SMC3) so ausgestaltet ist, daß sie periodisch die Veränderung ihres aktuellen aktiven Datenbestands in Bezug auf eine in der zugeordneten Redundanz-Datenverarbeitungseinheit (RD1, RD2) gespeicherten Kopie ihres aktiven Datenbestands (AD1 bis AD3) ermittelt und diese Veränderung beschreibende Korrektur-Daten (CD) an die zugeordnete Redundanz-Datenverorbeitungseinheit (RD1, RD2) zur Aktualisierung der in der zugeordneten Redundanz-Datenverarbeitungseinheit (RD1, RD2) gespeicherten Kopie ihres aktiven Datenbestands (AD1 bis AD3) übermittelt,
**dadurch gekennzeichnet, daß** die Datenverarbeitungseinheit (SMC1 bis SMC3) weiter so ausgestaltet ist
daß sie die Veränderung eines Applikationsprogramme (AP1) überwacht und die zugeordnete Redundanz-Datenverarbeitungseinheit (RD1, RD2) über eine Veränderung der Programm-Version (P1, P2) des Applikationsprogramms (AP1) informiert und eine Kopie dieser Programm-Version (P1, P2) oder eine Kennung derselben übermittelt

9. Datenverarbeitungssystem (SYS) mit zwei oder mehr aktiven Datenverarbeitungseinheiten (SMC1 bis SMC3) nach Anspruch 8 und mit mindestens einer Redundanz-Datenverarbeitungseinheit (RD1, RD2) nach Anspruch 7.

10. Datenverarbeitungssystem (SYS) nach Anspruch 9, **dadurch gekennzeichnet, daß** das Datenverarbeitungssystem (SYS) ein Netzwerkmanagementsystem ist.

## Claims

1. Method for operating a data processing system (SYS) having a plurality of data processing units (SMC1 to SMC4, EX1, EX2, OT1 to OT3, RD1, RD2),
wherein
two or more active data processing units (SMC1 to SMC3) of the data processing system are respectively assigned to a redundancy data processing unit (RD1, RD2) of the data processing system (SYS), the redundancy data processing unit (RD1, RD2) respectively stores a copy of the active data stock (AD1 to AD3) of each of the active data processing units (SMC1 to SMC3) assigned to it, each of the two or more active data processing units (SMC1 to SMC3) periodically ascertains the change in its current active data stock in relation to the copy of its active data stock (AD1 to AD3) stored in the assigned redundancy data processing unit (RD1, RD2) and transfers to the assigned redundancy data processing unit (RD1, RD2) correction data (CD) describing this change, by means of this transferred correction data (CD) the redundancy data processing unit (RD1, RD2) updates its stored copy of the active data stock (AD1 to AD3) of the respective transferring active data processing unit (SMC1 to SMC3), and the redundancy data processing unit (RD1), in the event of the failure of an active data processing unit (SMC1) assigned to it, assumes the function of this failed data processing unit (SMC1) on the basis of its stored copy of the active data stock (AD1) of the failed data processing unit (SMC1),
**characterized in that**
the two or more active data processing units (SMC1 to SMC3) monitor the changing of one of their application programs (AP1) and inform the assigned redundancy data processing unit (RD1, RD2) about a change of the program version (P1, P2) of the application program and transfer copies of these program versions (P1, P2) or an identifier of same and, for the purpose of assuming the function of a failed data processing unit (SMC1), a program version (P1) assigned to the failed data processing unit (SMC1) is ascertained and this program version (P1) is activated with the stored copy of the active data stock (AD1) of the failed data processing unit.

2. Method according to claim 1, **characterized in that** two or more redundancy data processing units (RD1, RD2) are assigned to one of the one or more active data processing units (SMC2, SMC3) and these active data processing units (SMC2, SMC3) transfer correction data to all of these assigned redundancy data processing units (RD1, RD2).

3. Method according to claim 1, **characterized in that** there are stored in the redundancy data processing unit (RD1, RD2) copies of the current program versions (P1, P2) of the data processing units (SMC1 to SMC3) assigned to it.

4. Method according to claim 3, **characterized in that** the two or more active data processing units (SMC1 to SMC3) are classified, in the redundancy data processing unit (RD1, RD2) to which they are assigned, in relation to the program versions currently used by them and, for each classification of active data processing units, the redundancy data processing unit (RD1, RD2) stores a copy of the program version assigned to this classification.

5. Method according to claim 1, **characterized in that** the data stock (SD1) of the two or more active data processing units (SMC1) is divided into site-specific data and non-site-specific data (AD1) and only non-site-specific data constitute the active data stock of the data processing unit (SMC1) and are included in the ascertainment of the correction data (CD).

6. Method according to claim 1, **characterized in that**, for the purpose of assuming the function of a failed data processing unit (SMC1), a program version (P1) assigned to the failed data processing unit (SMC1) is ascertained and this program version (P1) is activated with the stored copy of the active data stock (AD1) of the failed data processing unit (SMC1) and site-specific data (LD) of the redundancy data processing unit.

7. Redundancy data processing unit (RD1, RD2) for a data processing system (SYS) having a plurality of data processing units (SMC1 to SMC4, EX1, EX2, OT1 to OT3, RD1, RD2), wherein the redundancy data processing unit (RD1, RD2) is provided with a databank (ADDB) in which there is respectively stored a copy of the active data stock (AD1 to AD3) of two or more active data processing units (SMC1 to SMC3) of the data processing system to which the redundancy data processing unit (RD1, RD2) is assigned, the redundancy data processing unit (RD1, RD2) is so designed that, by means of correction data (CD) respectively transferred to it by the respective assigned active data processing unit (SMC1 to SMC3) and that are periodically ascertained by the respective assigned active data processing units (SMC1 to SMC3) from the change in their current active data stock in relation to the copy of their active data stock (AD1 to AD3) stored in the redundancy data processing unit (RD1, RD2), said redundancy data processing unit (RD1, RD2) updates the copies, stored in the databank (ADDB), of the active data stock (AD1 to AD3) of the active data processing units (SMC1 to SMC3) to which it is assigned and the redundancy data processing unit (RD1, RD2) is additionally so designed that, in the event of the failure of an active data processing unit (SMC1) assigned to it, it assumes the function of this failed data processing unit (SMC1) on the basis of its stored copy of the active data stock (AD1) of the failed data processing unit (SMC1),
**characterized in that**
the redundancy data processing unit (RD1, RD2) is furthermore so designed that it receives, in an initialization phase, but also in the operating phase, copies or an identifier of the program versions (P1, P2) of the data processing units (SMC1 to SMC3) assigned to it and, in the event of the failure of an active data processing unit (SMC1) assigned to it, ascertains the assigned program version (P1) of said processing unit (SMC1), and this program version (P1) is activated with the stored copy of the active data stock (AD1) of the failed data processing unit (SMC1).

8. Data processing unit (SMC1 to SMC3) for a data processing system (SYS) having a plurality of data processing units (SMC1 to SMC4, EX1, EX2, OT1 to OT3, RD1, RD2) and having at least one redundancy data processing unit (RD1, RD2) assigned to the data processing unit, wherein
the data processing unit (SMC1 to SMC3) is so designed that it periodically ascertains the change in its current active data stock in relation to a copy of its active data stock (AD1 to AD3) stored in the assigned redundancy data processing unit (RD1, RD2) and, for the purpose of updating the copy of its active data stock (AD1 to AD3) stored in the assigned redundancy data processing unit (RD1, RD2), transfers to the assigned redundancy data processing unit (RD1, RD2) correction data (CD) describing this change,
**characterized in that**
the data processing unit (SMC1 to SMC3) is furthermore so designed that it monitors the changing of one of its application programs (AP1) and informs the assigned redundancy data processing unit (RD1, RD2) about a change of the program version (P1, P2) of the application program (AP1) and transfers a copy of this program version (P1, P2) or an identifier of same.

9. Data processing system (SYS) having two or more active data processing units (SMC1 to SMC3) according to claim 8 and having at least one redundancy data processing unit (RD1, RD2) according to claim 7.

10. Data processing system (SYS) according to claim 9, **characterized in that** the data processing system (SYS) is a network management system.

## Revendications

1. Procédé pour l'exploitation d'un système de traitement de données (SYS) avec plusieurs unités de traitement de données (SMC1 à SMC4, EX1, EX2, OT1 à OT3, RD1, RD2), sur lequel à chaque fois deux ou plus de deux unités de traitement de données actives (SMC1 à SMC3) du système de traitement de données sont attribuées à une unité de traitement de données redondante (RD1, RD2) du système de traitement de données (SYS), dans lequel l'unité de traitement de données redondante (RD1, RD2) mémorise à chaque fois une copie du stock de données actif (AD1 à AD3) de chacune des unités de traitement de données (SMC1 à SMC3) actives qui lui sont attribuées, dans lequel chacune des deux ou plus de deux unités de traitement de données actives (SMC1 à SMC3) détermine périodiquement la modification de son stock de données actif actuel par rapport à la copie, mémorisée dans l'unité de traitement de données redondante (RD1 , RD2) attribuée, de son stock de données actif (AD1 à AD3) et transmet les données de correction (CD) décrivant cette modification à l'unité de traitement de données redondante (RD1, RD2) attribuée, dans lequel l'unité de traitement de données redondante (RD1, RD2) met à jour au moyen de ces données de correction (CD) transmises la copie, stockée par elle, du stock de données actif (AD1 à AD3) de l'unité de traitement de données active (SMC1 à SMC3) de transmission respective, et dans lequel, en cas de défaillance d'une unité de traitement de données active (SMC1) qui lui est attribuée, l'unité de traitement de données redondante (RD1) assume la fonction de cette unité de traitement de données (SMC1) défaillante à partir de la copie, stockée par elle, du stock de données actif (AD1) de l'unité de traitement de données (SMC1) défaillante,
**caractérisé en ce que**,
les deux ou plus de deux unités de traitement de données actives (SMC1 à SMC3) contrôlent la modification d'un de ses programmes d'application (AP1) et informent l'unité de traitement de données redondante (RD1, RD2) attribuée sur une modification de la version de programme (P1, P2) du programme d'application et transmettent des copies de ces versions de programme (P1, P2) ou un code de celles-ci, et une version de programme (P1) attribuée à l'unité de traitement de données (SMC1) défaillante est déterminée pour la prise en charge de la fonction d'une unité de traitement de données (SMC1) défaillante et cette version de programme (P1) est activée avec la copie stockée du stock de données (AD1) actif de l'unité de traitement de données défaillante.

2. Procédé selon la revendication 1, **caractérisé en ce que** deux ou plus de deux unités de traitement de données redondantes (RD1, RD2) sont attribuées à l'une ou à plusieurs des unités de traitement de données actives (SMC2, SMC3) et **en ce que** ces unités de traitement actives (SMC2, SMC3) transmettent des données de correction à toutes ces unités de traitement de données redondantes (RD1, RD2) attribuées.

3. Procédé selon la revendication 1, **caractérisé en ce que** des copies des versions de programme (P1, P2) actuelles des unités de traitement de données actives (SMC1 à SMC3), qui lui sont attribuées, sont mémorisées dans l'unité de traitement de données redondante (RD1, RD2).

4. Procédé selon la revendication 3, **caractérisé en ce que** les deux ou plus de deux unités de traitement de données actives (SMC1 à SMC3) sont classées dans l'unité de traitement de données redondante (RD1, RD2), à laquelle elles sont attribuées, par rapport aux versions de programme utilisées actuellement par elles et **en ce que** l'unité de traitement de données redondante (RD1, RD2) mémorise pour chaque classe d'unités de traitement de données active une copie de la version de programme attribuée actuellement à cette classe.

5. Procédé selon la revendication 1, **caractérisé en ce que** le stock de données (SD1) des deux ou plus de deux unités de traitement de données (SMC1) active est subdivisé en données spécifiques à l'emplacement et données (AD1) indépendantes de l'emplacement et seules des données indépendantes de l'emplacement forment le stock de données actif de l'unité de traitement de données (SMC1) et entrent dans le calcul des données de correction (CS).

6. Procédé selon la revendication 1, **caractérisé en ce que**, pour assumer la fonction d'une unité de traitement de données (SMC1) défaillante, une version de programme (P1) attribuée à l'unité de traitement de données défaillante est déterminée et cette version de programme (P1) est activée avec la copie mémorisée du stock de données (AD1) actif de l'unité de traitement de données (SMC1) défaillante et avec des données (LD) spécifiques à l'emplacement de l'unité de traitement de données redondante.

7. Unité de traitement de données redondante (RD1, RD2) pour un système de traitement de données (SYS) avec plusieurs unités de traitement de données (SMC1 à SMC4, EX1, EX2, OT1 à OT3, RD1, RD2), sur lequel l'unité de traitement de données redondante (RD1, RD2) est dotée d'une banque de données (ADDB), dans laquelle à chaque fois une copie du stock de données (AD1 à AD3) actif est mémorisée par deux ou plus de deux unités de traitement de données actives (SMC1 à SMC3) du système de traitement de données, auxquelles l'unité de traitement de données redondante (RD1, RD2) est attribuée, sur lequel l'unité de traitement de données redondante (RD1, RD2) est conçue de telle sorte qu'elle met à jour les copies, stockées dans la banque de données (ADDB), du stock de données (AD1 à AD3) actif des unités de traitement de données actives (SMC1 à SMC3), auxquelles elle est attribuée, au moyen de données de correction (CD), qui lui sont transmises à chaque fois par l'unité de traitement de données active (SMC1 à SMC3) attribuée respective et qui sont déterminées périodiquement à partir de la modification de son stock de données actif actuel par rapport à la copie, stockée dans l'unité de traitement de données redondante (RD1, RD2), de son stock de données (AD1 à AD3) actif, par les unités de traitement de données actives (SMC1 à SMC3) attribuées respectives et sur lequel l'unité de traitement de données redondante (RD1, RD2) est conçue également de telle sorte que, en cas d'une défaillance d'une unité de traitement de données active (SMC1) qui lui est attribuée, la fonction de cette unité de traitement de données (SMC1) défaillante est prise en charge à partir de la copie, stockée par elle, du stock de données (AD1) actif de l'unité de traitement de données (SMC1) défaillante,
**caractérisée en ce que** l'unité de traitement de données (RD1, RD2) redondante est conçue également de telle sorte que, dans une phase d'initialisation, mais également lors de la phase d'exploitation, elle reçoit des copies ou un code des versions de programme (P1, P2) des unités de traitement de données (SMC1 à SMC3) qui lui sont attribuées, et en cas de défaillance d'une unité de traitement de données active (SMC1) qui lui est attribuée, sa version de programme (P1) attribuée est déterminée et cette version de programme est activée avec la copie stockée du stock de données (AD1) actif de l'unité de traitement de données (SMC1) défaillante.

8. Unité de traitement de données (SMC1 à SMC3) pour un système de traitement de données (SYS) comprenant plusieurs unités de traitement de données (SMC1 à SMC4, EX1, EX2, OT1 à OT3, RD1, RD2) et au moins une unité de traitement de données redondante (RD1, RD2) attribuée à l'unité de traitement de données, l'unité de traitement de données (SMC1 à SMC3) étant conçue de telle sorte qu'elle détermine périodiquement la modification de son stock de données actif actuel par rapport à une copie, stockée dans l'unité de traitement de données redondante (RD1 à RD3) attribuée, de son stock de données (AD1 à AD3) actif et transmet des données de correction (CD) décrivant cette modification à l'unité de traitement de données redondante (RD1, RD2) attribuée pour la mise à jour de la copie, stockée dans l'unité de traitement de donnée redondante (RD1, RD2) attribuée, de son stock de données (AD1 à AD3) actif,
**caractérisée en ce que** l'unité de traitement de données (SMC1 à SMC3) est conçue également de telle sorte qu'elle contrôle la modification d'un programme d'application (AP1) et informe l'unité de traitement de données redondante (RD1, RD2) attribuée sur une modification de la version de programme (P1, P2) du programme d'application (AP1) et transmet une copie de cette version de programme (P1, P2) ou un code de celle-ci.

9. Système de traitement de données (SYS) comprenant deux ou plus de deux unités de traitement de données actives (SMC1 à SMC3) selon la revendication 8 et au moins une unité de traitement de données redondante (RD1, RD2) selon la revendication 7.

10. Système de traitement de données (SYS) selon la revendication 9, **caractérisé en ce que** le système de traitement de données (SYS) est un système de gestion de réseau.
